# EUROPEAN PATENT SPECIFICATION

(11) **EP 0 364 628 B1**
(45) Date of publication and mention of the grant of the patent: **28.08.1996**
(21) Application number: 88202342.7
(22) Date of filing: 19.10.1988
(51) Int. Cl.: B01D 61/00, B01D 53/22, B01D 59/10, B01D 67/00

(54) **Gas, isotope, and liquid separations by membranes**
Membrantrennverfahren für Gase, Isotope und Flüssigkeiten
Séparations de gaz, d'isotopes et de liquides à l'aide de membranes

(43) Date of publication of application: 25.04.1990
(73) Proprietor: Khodai Joopary, Arastoo, Davis, California 95616 (US)
(72) Inventor: Khodai Joopary, Arastoo, Davis, California 95616 (US)
(74) Representative: Baarslag, Aldert D.

(56) References cited:
- EP-A- 0 080 684
- EP-A- 0 229 872
- WO-A-87/05850
- FR-A- 1 194 271
- FR-A- 2 406 469
- GB-A- 1 375 204
- GB-A- 2 014 184
- US-A- 3 713 921
- US-A- 3 770 532
- US-A- 3 802 972
- IBM TECHNICAL DISCLOSURE BULLETIN, vol. 21, no. 4, September 1978, pages 1393- 1395, New York, US; H.G. PETERS et al.: "Process for separating water from halogenated hydrocarbons"
- PATENT ABSTRACTS OF JAPAN, vol. 4, no. 34 (C-3)[516], 22nd March 1980; & JP-A- 55 8803 (ASAHI KASEI KOGYO K.K.) 22-01-1980
- JOURNAL OF CHEMICAL ENGINEERING OF JAPAN, vol. 19, no. 4, August 1986, pages 281-286, Tokyo, JP; H. UNNO et al.: "Oil separation from oil-water mixture by a porous poly(tetrafluoroethylene) (PTFE) membrane"
- IND. ENG. CHEM. PROCESS DES. DEV., vol. 22, no. 4, October 1983, pages 625-632, American Chemical Society, Washington, US; J.M. DICKSON et al.: "Aromatic hydrocarbon-water separations by a pressure-driven membrane separation process"
- Journal Of Chemical Engineering Of Japan, vol. 19, No. 1, 1986, pages 72-77, Masashi Asaeda and Luong Dinh Du: "Separation of alcohol/water gaseous mixtures by thin ceramic membrane"

## Description

The invention involved is a very versatile one and relates to almost any process and field wherein an etched charged particle tracks permselective membrane is used. It also makes it possible to produce new membranes and to improve the existing membranes and to use such permselective membranes for many new applications. Because the present invention provides the reason for permselectivity, it is therefore a master key for almost every permselective membrane separation for the separation of all kinds of gases, vapours, isotopes and all kinds of liquid solutions including biomembrane separations.

The present invention makes it possible to produce most efficient membranes for gaseous isotope separation of elements from hydrogen to uranium with exceptional high separation factors which are much higher than those expected according to the inverse square root of the masses of the gases. By using the present invention one may greatly improve the properties of the existing membranes e.g. for desalination of water by the so called reverse osmosis, by changing, modifying and controlling their pore structures and also their thicknesses. Further one may produce far better membranes for the desalination of water and for the permseparation of water from e.g. ethanol, and for many other liquid solution separations.

Permselective membranes other than biomembranes are made from various materials such as polymers, copolymers etc. Polymeric permselective membranes for permseparation of various gases such as O₂ and N₂, CO and H₂, SO₂ and air, inert gases and air, hydrogen and methane and other gas mixtures have been made with various permeability and separation factors. Some attempts have been made in order to interpret and to give reasons for these permselectivities by various authors using different models and concepts such as solubility and diffusion of penetrant in the membranes. For example, the difference in permeability of different gases in a given polymeric membrane is explained by various authors by the difference in solubilities and diffusions of the gases in the membrane. Sometimes the same argument, i.e. solubility and diffusion, are also used for the separation of water from ethanol or acetic acid by pervaporation. Usually the role of the functional groups is emphasized. The main attempt and emphasis of the researchers have been put on the role of the functional groups in the membranes. However, the present invention will demonstrate that the microcapillary action of the pores has the main role if not the complete role.

Isotope separation by membrane e.g. uranium enrichment being the most important one, is accomplished by using (nickel) membranes with very fine pores (with radii of a few nanometer). This is a rare example that the pores are considered to have a major role for separation. However, the best separation factors that were attempted to be obtained is according to the inverse square root of the masses of the hexafluorides of the two uranium isotopes i.e. 1.0043, which is indeed very small. Therefore thousands of separation stages and very costly plants and operations are needed. Separation factors being any greater than those expected according to the inverse square root of the masses are scientifically unexpected and unbelievable. This is based on the fact that the transport of gases through such membranes is a simple diffusion of the gases and therefore proportional to the average speed of the molecules. This in turn is because according to the prior art the pores are not small enough and/or the membranes are not thick enough for the microcapillary action and the permseparation of isotopes according to the invention. Those who know the exact properties i.e. the pore structure and the thicknesses of such membranes by using the present invention may easily find out what is wrong and may very easily improve them drastically.

Nuclepore microfilter membranes are made by chemical etching of dielectrics such as mica and polymeric materials, glasses etc. that have been irradiated with the charged particles such as heavy ions from accelerators or fission fragments. These filters have the unique advantage that the pore density is selected by the number of charged particles per unit area of the material. And the sizes of the pores by the etching conditions and the etching time, and the length of the pores may be limited by the range of charged particles such as fission fragments or alpha particles in the material. These nuclepore filters are commercially available with various pore sizes, and are used for many different purposes from preparing ultra pure water, clearing of tap water to the separation of proteins etc.

What has been brought up for these nuclepore filters and also for irradiated but unetched material is that they may be used for separating large molecules from small ones, or molecules with smaller molecular weights from those with larger molecular weights. However, not any separation was based on the difference in their bulk properties as is claimed by the present invention. See e.g. United States patent 3,303,085 (patented February 1967).

One obvious problem with the polymeric and other porous membranes as compared to nuclepore membranes is that their pores are not uniform and are not straight-through pores but tortuous. Further the sizes of the pores can not be made as desired as is the case for nuclepores. However, some trade mark polymer membranes having pores made by stretching are very promising for exploitation of the present invention. Therefore nobody has paid enough attention to the real important role of pores for permselectivity.

In the case of nuclepore membranes with straight pores down to a few nanometers diameter have been made and used, but again the role of very small pores or also membranes with small pores for permseparation of gases and liquids has not been discovered. Especially separation factors much greater than those expected for isotope separation are unbelievable.

The microcapillary action of very fine pores is the cause of permselectivity by membrane separation in at least most, if not all cases of permselective separations. It is emphasized that the microcapillary action of very fine pores with the right geometrical size, shape and length amplify the difference between the bulk properties (such as viscosity, and properties related to the cohesive forces between molecules) of the fluids (gases and liquids). Consequently the through-puts (flow rates) of the gases, or liquids i.e. pure liquids such as water and ethanol etc., or solutions with different concentrations through the membranes (or microfilters) having these pores will be quite different. Therefore under ideal conditions of geometrical size, shape and length of the pores and pressure difference across the membrane, one component of the fluid i.e. the one with the highest throughput of the solution, or gas mixture, completely excludes and prevents the other component from entering the pores and passing through the membrane. In the case of liquid separations, the component, which enters the pores and will be permseparated, may be a pure solvent such as water or a solution with a certain composition. The composition of the penetrating solution can be varied by varying the geometrical factors of the pores and/or the composition of feed solution etc.

The ideal or optimum condition of geometrical size, shape and length of the pores and the pressure difference across the membrane for permseparation mentioned above and other factors such as temperature are strongly interrelated and are dependent on each other. These conditions and factors also well depend upon the permseparation case at hand, i.e. upon the difference in the bulk properties (such as viscosity etc.) between the component to be permseparated and other components of the fluid solutions. In the case of liquid solutions the difference between the bulk properties of this component and the rest of solution with continuous concentration other than the permeate solution (liquid) must be considered for permseparation. For example, from known experimental data it is clear that within certain critical limits, which should be determined empirically in each case, for thinner membranes i.e. shorter lengths of the pores, the size of the pores for permseparation must be smaller than that of longer pores and vice versa. Therefore for each permeation case or given category of permseparations the conditions for optimizing permseparation and making it more economical should be searched empirically as described later. It is also clear that the larger the difference between the bulk properties of the components of the gas or liquid solution to be permseparated, which affects the flow rates of its components, the larger will be the maximum pore size and the smaller will be the minimum pore length that is required for permseparation.

In the Journal of Chemical Engineering of Japan, vol. 19, No.1, 1986, pages 72-77 the use of thin porous ceramic membranes for adequate gasphase separation of alcohol/water gaseous mixtures like methanol/water, ethanol/water and isopropanol/water systems at their normal boiling points is disclosed. More in particular porous ceramic membranes have been used having a pore size distribution peak at around 3 µm (based on measured adsorption isotherms of nitrogen), a thickness of 10 µm and supported by a coarse porous ceramic substrate. However, with respect to the pore diameter it is stated on page 73, right column, that the ".... pores are considered to have constrictions of diameters far less than 3 nm ....". Apparently, the pore size of said constrictions cannot be adequately obtained from the nitrogen adsorption isotherms.

The invention relates to a process of permseparation of a component from a multicomponent fluid by separating one component from a mixture of gases, e.g. isotopes, or liquids as a fluid by means of a permselective, etched charged particle tracks membrane of a solid material with pores having a diameter in the range of 2-5 nm, the membrane thickness being 20-60 µm, and the pores having a size, shape and length resulting in a microcapillary action which cause microphase separation on the molecular level of one component of the fluid, i.e. the component with the highest throughput, and the transport of that component across the membrane by flowing through the pores resulting in a complete or substantially complete separation, in which the permseparation depends on the difference between the bulk properties of the components.

More in particular permselective membranes are used, which have straight through pores having a diameter of 2-5 nm and made by chemical etching of nuclear tracks in dielectrics. The permselective membranes according to the invention are effective for almost every permseparation from gas and isotope separation to liquid separation under low pressure differences. However, since the efficiency is important optimized conditions must be determined. There is a rather considerable but also limited range wherein both size and length of the pores can be varied and both increased or decreased. However, the range that only one factor can be varied and the other one is kept constant is more limited. Concerning the formula for the flow rates of fluids through the capillaries it is considered better to use pores which are long enough (more than a few tens of micrometer) and search for the maximum pore size.

At present the best way of carrying out the invention and for obtaining optimized conditions is to start with nuclepore microfilters. Although these microfilters are commercially available, for the present invention improved methods are not only useful but even required for many of its applications.

Improved special procedures for producing microfilters made of mica and polyvinylidene fluoride (PVDF) and improved general procedures for producing microfilters from all other dielectrics are described.

Mica microfilters with very small pores can be made by chemically etching of (muscovite) mica foils that have been irradiated with heavy ions (with mass greater than about 40) with energies from about 8-160 10⁻¹³J (5-100 Mev) per nucleon, with solutions of HF of various concentrations at room temperature. In order to have large throughputs, especially for gas and isotope separations, the pore density should be high. In order to achieve the best permselectivity the size of the pores should be very small, about 2-5 nm, and they should not be less than about 20 µm long. It is considered very important that there should not be larger pores due to the overlapping of the pores etc. The size of the pores is normally selected by controlling the etching time and the concentration. What is well established is that the pores made in mica by etching charged particle tracks (mass greater than about 20) with solutions of HF are quite cylindrical and of uniform shape along their entire length (this is not the case for almost all the other dielectrics). This is only true for pores larger than about 1 µm in diameter. However, Applicant has found by two different ways that the submicrometer pores made even in mica, especially with concentrated HF solutions at room temperature are not cylindrical but have the shape of sand (hour) glass. The first way was as follows: Mica foils of about 60 µm thickness irradiated with U²³⁸ ions of 9.6 10⁻¹³J/N (6 Mev/N) with a density of 10¹⁰ ions/cm² were etched stepwise in 5 normal HF solution at room temperature. After each etching step the mica foil was washed with water and dried and an attempt was made to measure the throughput for hydrogen with a pressure difference of about 65.4 kPa (2/3 atmosphere). It was found that no hydrogen passed through the mica until about 5 minutes total etching time. This is interpreted as the time required for the pores to break through the foil. The second way which proves that the small pores are not cylindrical was by etching in concentrated HF solution at higher temperature. A one hundred µm thick mica foil irradiated with xenon ions at an angle of 30° and which ions did not pass through the foil, was etched in concentrated (48%) HF at about 50°C. After about 30 minutes very beautiful large cones were observed with an optical microscope. Cones of about the same size can be produced in mica by etching for a short time in HF and then in boiling (135°C) 15 normal NaOH for about 50 hours. Therefore, as described later, dilute solutions produce more cylindrical pores. Therefore less concentrated solutions of HF say about 1-5 normal and low temperatures even less than room temperature e.g. 0-20°C should be used in order to obtain more cylindrical pores. This item is especially important for cases with high pore density. Two other important items must be considered for etching of mica and other dielectrics, especially for making submicron pores. First, the thicker the mica (or any other dielectric) foil the longer will be the etching time for a certain small size pore. The etching time for different micas from different sources for otherwise equal conditions may differ by about a factor of two.

In general, the etching of other dielectrics such as polymeric materials is not as easy as the etching of mica. Especially it is more difficult to produce nuclepores with small pores from other dielectrics, since their pores are generally not cylindrical. This is because of the fact that the ratio of the track etch rates to the bulk etch rates are generally much smaller than that of mica. The cone angle of the pore is determined from the relation, arcsin (track etch rate/bulk etch rate).

Applicant has found very interesting results by studying, in addition to the etching of mica, the etching of heavy ion tracks in polyvinylidene fluoride, PVDF, films ("Solef", trade mark of Engineering polymere Solvay) with various solutions and at various temperatures. Solutions of KOH, and NaOH, and mixtures of these two bases with KMnO₄ with various concentrations of the chemicals were used. In addition to published results (A.Khodai-Joopary, et al., G.S.I. Annual report (1986), page 236, and to be published in the Journal of Nuclear Tracks) the following two very useful general results were obtained. Firstly the pores become more cylindrical and their cone angles decrease as the temperature of the etching solution is decreased. This conclusion seems to be very general and applies to every dielectric material, as it was also the case for mica. Secondly, the pores become more cylindrical by decreasing the concentration of the etching solution, which also applies to every dielectric. These two interesting and general results can be used for controlling and tailoring the shapes of the pores in any dielectric and for any pore size, i.e. from very small to very large pores, and for every application.

In addition, it has been found that NaOH solutions produce much more cylindrical pores than KOH solutions. Both the track and radial (bulk) etch rates for NaOH are less than for KOH solutions and both are increased considerably by the addition of KMnO₄. Addition of KMnO₄ to both solutions makes the pores more cylindrical. Therefore in order to produce more cylindrical pores in any dielectric material dilute etching solutions and very low temperatures should be used. In the case of PVDF a solution of 1 N NaOH + 0.1 N KMnO₄ at room temperature is recommended. This should produce very cylindrical pores. In this case, and in general in order to obtain the correct etching time for the desired pore size, one can etch for a much longer time (in this case say a few days) and measure the size of the pores. Then by extrapolation one may estimate the time needed for the desired pore size. Subsequently etch PVDF, or any other material that has been irradiated with a high density of heavy ions (10¹⁰ ions/cm²) in a stepwise manner similar to that described for mica. Further try to measure the throughput of hydrogen through the foil after each etching step until some throughput is observed. In this way the desired etching time for any material can be found. Those skilled in the art may use the procedures described above for producing small pores of desired size and shape in any dielectric material (polymers, glasses etc.).

As a specific example the specifications of a couple of mica microfilters that were produced and used for some gas and isotope separation experiments, i.e. to measure the throughputs of several gases, will be described.

A mica foil of about 30 µm (or 60 µm) thick and irradiated with U²³⁸ ions with 9.6 10⁻¹³J/N (6 Mev/N) with a density of 10¹⁰ ions/cm² was etched for about 5 minutes (the thicker one for about 7 min) in 5 normal HF, or for about 25 min in one normal HF-solution. The diameter of the foil was 5 cm and the irradiated area was 4 cm.

The microfilters described above were used to measure the throughputs of several gases by transmission method in a very simple way. Those skilled in the art know that it is very easy to measure the throughput of all kinds of gases through the filters, especially when the throughputs are large as is the case for these microfilters and for almost any kind of gas. For UF₆ the temperature should be over 60°C, and plastic microfilters that are resistant to hydrofluoric acid should be used. As described above PVDF microfilters can be produced and used for this purpose. In general, the ratio of the throughputs of two gases gives a good indication of their separation factors. Therefore, e.g. it is sufficient to measure the throughputs of natural and highly enriched UF₆.

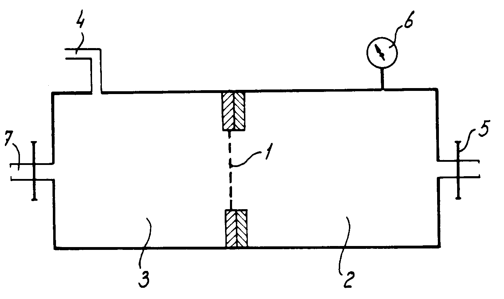

The filter (1), as shown in the figure, was fixed in the middle of an aluminium chamber using O-rings and a stainless steel grid to protect the filter against the change in pressure. The volume of the permeate side (2) of the chamber was about 60 cm³ (and could be increased by adding another piece). The pressure on the feed side (3) was fixed at the atmospheric pressure by letting the gas bubble through the outlet (4) via oil in the air. The pressure on the permeate side (2) was reduced by a vacuum pump through the valve (5) usually to about 1/2 atmosphere (500 millibar = 5.10⁴ Pa). The difference between the atmospheric pressure and the permeate side (2) was measured by a pressure measuring device (6) in millibars. The gas entered the feed side (3) of the filter through the inlet (7). After the permeate side (2) was flashed several times by the gas under study, it was pumped to the desired pressure, usually about 500 milibars (5.10⁻⁴ Pa), and the valve (5) to the pump was closed. By measuring the change in the pressure on the permeate side (2) as a function of time the throughput was calculated. Or simply the ratio of the times required in order to have a certain pressure change between the same initial and final pressures was used as the ratio of the throughputs of the two gases. In this way Applicant has found that the throughput of hydrogen is more than ten times more than that of helium. The ratio of the throughput of hydrogen to air was over one hundred. The permeability for hydrogen (for the above described mica microfilter) was about 37.5 x 10⁻⁶ cm³ (STP).cm/cm².s.kPa (5x10⁻⁶ cm³ (STP).cm/(cm².s.cm Hg)). This permeability is already larger than for polymer or silicon rubber membranes. According to the way these filters are produced the throughput can be increased by increasing the density of the pores (taking overlapping into consideration), and also by increasing the pore size, if not loosing permselectivity.

Since it has been measured that the permeability for deuterium in polyvinyl alcohol films is five times less than for helium (Journal of Applied Polymer Science, vol.29, 261-268 (1984)), it is therefore predicted that the ratio of the throughputs of hydrogen to deuterium is at least 10 and may be as much as 50. Applicant also predicts that production of heavy water by permseparation of H₂O and D₂O should be economically feasible by this invention. On account of the fact that there is enough difference between the bulk properties of the vapours, a high separation factor is obtainable. Remember that the permeability of water through polymeric membranes is substantially higher than of any vapour or gas and this is because water is a highly polar molecule. As a rule the higher the cohesive forces between the molecules the better will be its permeability, and this rule is a good guidance.

It is very difficult to find any single or any combination of the bulk properties such as viscosity, critical temperature etc. of the gases or liquids in order to find an empirical or semi-empirical relationship for such large differences in the throughputs of gases or liquids. All the experimental data measured so far strongly support the invention, not only by the phenomenon that micro-capillary action is the cause of permseparation but also the concept that one fluid excludes the others and prevents them from entering the pores.

Even by working with mixed gases of unknown composition, Applicant was able to find very interesting results. The observation, that by attempting to measure the throughput of hydrogen through the foil after each etching step, the pores do not break through very shortly after the etching was described before. Even, for mixed gases from argon, hydrogen and helium cylinders, and air it was repeatedly found that the ratio of the throughputs are usually higher than those expected from the ratio of the inverse square roots of their masses and the difference was very considerable.

Because of the temporary lack of facilities to measure the concentrations etc. 1-butanol was chosen in order to study permseparation of an organic liquid-water solution. This alcohol with water gives two phases with the following concentrations at 20°C in weight %: Alcoholic phase: 79.93% 1-butanol and 20.07% water, and the aqueous phase: 7.8% 1-butanol, and 92.19% water. This makes it possible to observe in a primitive way the separation of water by capillaries by observing the increase in the height of the alcoholic phase (on top).

In preliminary experiments, mica microfilters of about 60 µm thick irradiated with a density of 10⁸ ions/cm², and etched from 4-15 minutes in concentrated HF were used. In quite a few experiments it was definitely proved that it is very feasible and rather easy to separate organic liquids from water by capillary action, and it must be a lot more efficient than what is called pervaporation. The effective diameter of the microfilters was about 1.7 cm. The two phases were observed and measured in a transparent plastic tubing with a diameter of about 1 cm. With shorter etching times i.e. smaller pores the height of the alcoholic phase increased considerably as an aqueous solution with an alcohol concentration which was much less than the alcohol concentration of the aqueous phase, passed through the pores. The total height of the tube was about 150 cm. Therefore there was not enough pressure to push the pure water out of the smaller pores. But it is very reasonable that the pores for complete separation are much larger than experts would expect, and the required pressure is much less than expected before the present invention had been done. The same arguments hold for desalination of water, and both are simply permseparation by means of capillary pores. In fact in both cases and all other similar cases, pure water which has the highest throughput compared to the solution with any concentration is permseparated by microphase separation by means of the capillary action of the pores and passes through the pores of the membrane. Rather high pressures are required in desalination by "reverse osmosis" because the pores in the skin of asymetric membranes or the symetric ones are very small. The pores must be much smaller than according to the present invention, simply because the thickness of the membrane e.g. the skin i.e. the length of the pores is very small. Any deviation from pure water flow i.e. 100% salt rejection can be simply explained by the fact that the pores are not of an equal and uniform size (and not straight through ones).

The results of the following experiments further support the present invention.

Flow rates (throughputs) of several pure liquids such as water, several low carbon alcohols, aceton, were measured and also aqueous solutions of these liquids and inorganic acids, sodium hydroxide, sodium chloride etc. as a function of concentration were measured through nuclepore filters. Mica and PVDF microfilters (50 µm or thicker) with pores from about 2-5 µm diameter were used, and the pores in PVDF were made by etching them in a solution of 6N NaOH + 0,1M KMnO₄, at 70°C. The pores in PVDF, produced in this way are quite sandglass shaped. Even these preliminary experiments show that e.g., the flow rate of water and ethanol is less than their solutions with any composition and there is a maximum in the curve of the time required for a certain amount of liquid to pass through any filter as a function of concentration, or, in other words a minimum in the flow rate. These experiments must be carried out in order to exploit this invention. These results clearly show why pure water is permseparated both in desalination and pervaporation. Further this invention very likely will make terms such as pervaporation, reverse osmosis etc. and, solubility and diffusion of penetrant in the membrane at least highly questionable if not obsolete.

From these flow rate measurements another phenomenon was discovered which is also very valuable for understanding and especially application of the present invention to permseparation of liquid solutions of any kind. It was observed that for solutions of alcohols or other organic liquids, or inorganic acids etc. with water for pores of average diameter of about 2 to 3 µm in PVDF (sandglass) and also in mica (the only sizes that are tested) first the flow rates decrease and then air bubbles which their number increase with the time of flow and proportional about to the inverse flowrate are raised from the surface of the filters upwards into the solution. These gas bubbles are very similar to those in a glass of beer. The flow rates continue to decrease. Obviously these gas bubbles are made in the capillary pores and after leaving the pores travel upwards in the solution. This is the cause of the gradual, and what has been previously measured exponential decrease in the flow rates of nuclepore filters and it certainly is the cause for hindering and decreasing the flow rate in all kinds of liquid membrane separations. Recently hydrophilic water insoluble material is used by some commercial nuclepore filters, and on the feed or low pressure side, which is claimed to make the decrease in their flow rates linear. Applicant has found that the best way of overcoming this problem is simply to arrange the apparatus (whenever possible) in such a way that the permeate side is upwards and always flooded with liquid. In this way also any gas bubbles produced in the capillaries can escape easily and do not block the pores, because it is easier for them to be pushed out towards the low rather than the high pressure side of the filters.

Having explained the above defined invention, it is straight forward for those skilled in the art to carry out this invention and to apply it to every case on the very diverse areas of technology, and to the advancement of the science of membrane transport, and especially to the membrane permseparation. The usefulness of this master key regarding the action of microcapillaries, and its diverse and numerous applications is too long to be even summarized in this application.

Nuclepore membranes made of different materials for many applications can be produced by the improved methods described above. Production of other kinds of membranes for this permseparation needs only some research. Drastic improvements in the efficiency and economy of all other non-nuclepore membranes by modifying them is now within the reach of any expert.

The way, according to which the present invention can be carried out and exploited very easily in industry can be summarized as follows:

One should start by producing and using nuclepore membranes as described above. It is easier to start with mica microfilters and etch them, taking into account the items described before. For mica, PVDF, or any other dielectric after choosing the proper etching conditions according to the guidelines described above, i.e. choosing the etching solution, its concentration and its temperature, the etching time for the smallest pores, i.e. the break-through of the pores through the sheet can easily be found by stepwise etching. Observation of some throughput for a gas such as hydrogen indicates the break-through of the pores. Alternatively a sharp rise in the electrical conductance across the membrane also indicates the break-through of the pores. For increasing the size of the pores in order to find the optimum conditions, again stepwise etching with small steps should be carried out.

Once the membranes with different etching times, i.e. different pore size have been made, throughputs of different gases and gaseous isotopes such as hydrogen, or their compounds such as water or uranium hexafluoride can easily be measured by a simple method (and also making arrangements for temperatures higher than room temperature) similar to that described method. For applying higher pressures, the pressure at the permeate side of the filter (2) in the enclosed figure can be fixed at the atmospheric pressure, and adjust a higher pressure on the feed side (3). In order to determine the optimum conditions for a given permseparation, again it is straight forward. The throughputs of different components of a gas, or different isotopes such as H₂, D₂, T₂ etc. or H₂O, D₂O, T₂O etc. or the two uranium hexafluorides (before a proper membrane for tetrahalides is developed) should be measured for different pore sizes and at different pressure differences across the membrane. The temperature can be also varied at a later stage. The ratio of the throughputs gives a good indication of the separation factors which are much larger than expected previously. The optimum conditions can be based on separation factors and throughputs and other economical factors. Once enough data have been gathered for different cases, and estimates of the pore sizes have been made, then it is rather easy to modify the existing membranes such as polymeric, or even metalic membranes, or to find other ways for making more economical membranes. For example by treating polymeric membranes by solutions such as 0.1 N NaOH by a process similar to the etching of nuclepores, the sizes of the pores (tortuous) will increase resulting in increasing the throughput. Further by precipitating an insoluble substance in the pores one may reduce their sizes. Also the pore structure can be modified by a multistage combination of etching and precipitation. The use of commercial polymers, which pore sizes can be varied by stretching, can be investigated. According to the present invention there is no need for using uranium hexafluoride if metallic or other membranes with the desired pores which are stable and resistant to acids above 400°C are produced.

Similar or modified procedures can be used for liquid separations such as desalination by the so called reverse osmosis or the separation of ethanol and water by so called pervaporation etc. It should be mentioned that in view of the present invention both processes are simply permseparation of liquids carried out in a very inefficient way, because both in the case of desalination and in the case of pervaporation by means of membranes which are permselective for water, the water simply flows through the pores. In pervaporation water evaporates somewhere in the pores and/or after passing through them, therefore according to the present invention the throughput is less than the case when the permeate side is in contact with water. Also desalination by reverse osmosis requiring such high pressures has to be abandoned. Simply because the osmotic pressure depends on the number of particles dissolved in a solvent such as water and it should not matter whether the particles are ions in the case of salts in water or they are molecules of ethanol or similar molecules. Applicant has proved experimentally as described above how easy it is to separate alcohol from water by permseparation using mica microfilters. It should be emphasized that for permseparation by micro capillary action the length of the pores is an important factor as well as the size and shape of the pores. Another important item for liquid separations is that arrangements should be made so that the permeate side is always in complete contact with the permeate liquid and the best way is to have the permeate side of membrane upwards.

## Claims

1. A process of permseparation of a component from a multicomponent fluid by separating one component from a mixture of gases, e.g. isotopes, or liquids as a fluid by means of a permselective, etched charged particle tracks membrane of a solid material with pores having a diameter in the range of 2-5 nm, the membrane thickness being 20-60 µm, and the pores having a size, shape and length resulting in a microcapillary action which cause microphase separation on the molecular level of one component of the fluid, i.e. the component with the highest throughput, and the transport of that component across the membrane by flowing through the pores resulting in a complete or substantially complete separation, in which the permseparation depends on the difference between the bulk properties of the components.

2. A process according to Claim 1, **characterized** by using a nuclear track membrane made by chemical etching of tracks of charged particles, heavy ions, or fission fragments in a sheet of
- mica, with the help of a 1-5N HF-solution as the etching solution at 0-20°C;
- or polyvinylidene fluoride with the help of a 1N NaOH + 0.1M KMnO₄ as the etching solution at room temperature.

3. A process according to claim 1, **characterized** by using a mica microfilter made by first irradiating a 20-60 µm thick mica foil with heavy ions with a mass number greater than about 40 with sufficient energy to pass through the foil with a density of about 10⁹-10¹¹ ions/cm², and then etching in a 5N HF solution for about 5-8 minutes, at 22°C.

4. A process according to Claim 1, characterized by separating gases and isotopes including uranium hexafluorides of the two uranium isotopes by using a polyvinylidene fluoride (PVDF) membrane, produced by irradiating a 20-60 µm thick PVDF film with heavy ions with a mass number greater than about 40 with sufficient energy to pass through the film with a density of 10⁹-10¹¹ ions/cm², and then etching the film in a solution of 1N NaOH + 0.1M kMnO₄ at about 0-20°C until the pores break through the film.

5. A process according to Claim 4, **characterized** by combining permseparation with the centrifuge or laser method for uranium enrichment.

## Patentansprüche

1. Permeationstrennverfahren zur Abtrennung einer Komponente aus einem Mehrkomponentenfluid durch Abtrennen einer Komponente aus einem Gemisch von Gasen, z.B. Isotopen, oder Flüssigkeiten als Fluid mittels einer aus einem festen Material bestehenden, 20-60 µm dicken, permselektiven, nachgeätzte Spuren geladener Teilchen aufweisenden Membran mit Poren mit einem Durchmesser im Bereich von 2-5 nm und einer Größe, Form und Länge, die eine Mikrokapillarwirkung ergeben, welche die Mikrophasenabtrennung einer Fluidkomponente, d.h. der Komponente mit dem höchsten Durchsatz, auf molekularer Ebene und den Transport dieser Komponente durch die Membran durch Fließen durch die Poren bewirkt, was eine vollständige oder weitgehend vollständige Abtrennung ergibt, wobei die Permeationstrennung vom Unterschied der physikochemischen Eigenschaften der Komponenten abhängt.

2. Verfahren nach Anspruch 1, dadurch gekennzeichnet, daß man eine Kernspurmembran, hergestellt durch chemisches Nachätzen der Spuren von geladenen Teilchen, Schwerionen oder Spaltfragmenten in einer Folie aus
- Glimmer mit Hilfe einer 1-5N HF-Lösung als Ätzlösung bei 0-20°C
- oder Polyvinylidenfluorid mit Hilfe einer 1N NaOH + 0,1M KMnO₄ als Ätzlösung bei Raumtemperatur, verwendet.

3. Verfahren nach Anspruch 1, dadurch gekennzeichnet, daß man einen Mikrofilter aus Glimmer, hergestellt durch Bestrahlung einer 20-60 µm dicken Glimmerfolie mit Schwerionen mit einer Massenzahl über etwa 40 und einer zum Durchdringen der Folie ausreichenden Energie mit einer Dichte von etwa 10⁹-10¹¹ Ionen/cm² und anschließendes etwa 5-8minütiges Nachätzen in einer 5N HF-Lösung bei 22°C, verwendet.

4. Verfahren nach Anspruch 1, dadurch gekennzeichnet, daß man Gase und Isotope, einschließlich den Uranhexafluoriden der beiden Uranisotope, mittels einer Membran aus Polyvinylidenfluorid (PVDF), hergestellt durch Bestrahlung einer 20-60 µm dicken PVDF-Folie mit Schwerionen mit einer Massenzahl über etwa 40 und einer zum Durchdringen der Folie ausreichenden Energie mit einer Dichte von 10⁹-10¹¹ Ionen/cm² und anschließendes Nachätzen der Folie in einer Lösung von 1N NaOH + 0,1M KMnO₄ bei etwa 0-20°C, bis die Poren die Folie durchbrechen, auftrennt.

5. Verfahren nach Anspruch 4, dadurch gekennzeichnet, daß man die Permeationstrennung mit dem Zentrifugen- oder Laserverfahren zur Urananreicherung kombiniert.

## Revendications

1. Procédé de séparation d'un composant par perméation par rapport à un fluide à composants multiples en séparant un composant d'un mélange de gaz, par exemple d'isotopes, ou de liquides, sous forme d'un fluide au moyen d'une membrane constituée d'une matière solide, à perméation sélective, dans laquelle ont été gravées des traces de particules chargées, dont les pores possèdent un dismètre dans le domaine de 2-5 nm, l'épaisseur de la membrane étant de 20-60 µm et les pores possédant une dimension, une configuration et une longueur telles que l'on obtient une action microcapillaire qui provoque la séparation en microphases au niveau moléculaire d'un composant du fluide, c'est-à-dire du composant présentant le débit le plus élevé, et le transport de ce composant à travers la membrane par écoulement passant par les pores, donnant lieu à une séparation complète ou essentiellement complète, dans lequel la séparation par perméation dépend de la différence entre les propriétés physico-chimiques des composants.

2. Procédé selon la revendication 1, caractérisé en ce qu'on utilise une membrane à traces nucléaires fabriquée par gravure chimique de traces de particules chargées, d'ions lourds ou de fragments de fission dans une feuille de
- mica, à l'aide d'une solution de HF 1-5N comme solution de gravure à 0-20°C;
- ou de fluorure de polyvinylidène à l'aide de NaOH 1N + KMnO₄ 0,1M comme solution de gravure à la température ambiante.

3. Procédé selon la revendication 1, caractérisé par le fait qu'on utilise un microfiltre en mica fabriqué en exposant d'abord une feuille en mica possédant une épaisseur de 20-60 µm à un rayonnement d'ions lourds possédant un nombre de masse supérieur à environ 40 et une énergie suffisante pour traverser la feuille, avec une densité d'environ 10⁹-10¹¹ ions/cm², puis en procédant à une gravure dans une solution de HF 5N pendant environ 5-8 minutes à 22°C.

4. Procédé selon la revendication 1, caractérisé par le fait de séparer des gaz et des isotopes, y compris des hexafluorures d'uranium des deux isotopes d'uranium en utilisant une membrane de fluorure de polyvinylidéne (PVDF) obtenue en exposant un film de PVDF ayant une épaisseur de 20-60 µm à un rayonnement d'ions lourds possédant un nombre de masse supérieur à environ 40 et une énergie suffisante pour traverser le film, avec une densité de 10⁹-10¹¹ ions/cm², puis en soumettant le film à une gravure dans une solution de NaOH 1N + KMnO₄ 0,1M à environ 0-20°C jusqu'à rupture des pores à travers le film.

5. Procédé selon la revendication 4, caractérisé par le fait qu'on combine la séparation par perméation avec le procédé à centrifugeur ou à laser pour l'enrichissement de l'uranium.
